(19) Europäisches Patentamt
European Patent Office
Office européen des brevets

(11) **EP 4 668 642 A1**

(12) **EUROPEAN PATENT APPLICATION**
published in accordance with Art. 153(4) EPC

(43) Date of publication:
**24.12.2025 Bulletin 2025/52**

(21) Application number: **24731225.9**

(22) Date of filing: **13.02.2024**

(51) International Patent Classification (IPC):
**H04L 5/00** (2006.01)   **H04W 72/232** (2023.01)
**H04W 64/00** (2009.01)

(52) Cooperative Patent Classification (CPC):
**H04L 5/00; H04W 64/00; H04W 72/232**

(86) International application number:
**PCT/KR2024/001994**

(87) International publication number:
**WO 2024/172443 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 US 202363446330 P**

(71) Applicant: **LG Electronics Inc.**
**Seoul 07336 (KR)**

(72) Inventors:
• **HWANG, Seunggye**
  **Seoul 06772 (KR)**
• **SHIM, Jaenam**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING/RECEIVING WIRELESS SIGNAL IN WIRELESS COMMUNICATION SYSTEM**

(57)    According to at least one of the embodiments disclosed in the present specification, a method of transmitting a sounding reference signal (SRS) by a user equipment (UE) in a wireless communication system includes: receiving configuration information for linking a plurality of SRS resource sets on a plurality of component carriers (CCs) with each other for SRS bandwidth aggregation; receiving downlink control information (DCI) triggering aperiodic SRS transmission on a first SRS resource set; and performing the aperiodic SRS transmission. Based on that the first SRS resource set on which the aperiodic SRS transmission is triggered is one of the plurality of SRS resource sets linked through the configuration information, the aperiodic SRS transmission may be performed on all of the plurality of CCs in which the plurality of SRS resource sets are configured.

**FIG. 16**

```
┌─────────────────────────────────┐ C05
│ Receive configuration information│
│   for SRS bandwidth aggregation  │
└─────────────────────────────────┘
                 │
                 ▼
┌─────────────────────────────────┐ C10
│                                 │
│           Receive DCI            │
│                                 │
└─────────────────────────────────┘
                 │
                 ▼
┌─────────────────────────────────┐ C15
│                                 │
│       Transmit aperiodic SRS     │
│                                 │
└─────────────────────────────────┘
```

**EP 4 668 642 A1**

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method and device for transmitting or receiving signals more accurately and efficiently in a wireless communication system.

The object of the disclosure is not limited to this, and other objects may be inferred from the disclosed embodiments.

### TECHNICAL SOLUTION

In an aspect of the present disclosure, provided herein is a method of transmitting a sounding reference signal (SRS) by a user equipment (UE) in a wireless communication system. The method includes: includes: receiving configuration information for linking a plurality of SRS resource sets on a plurality of component carriers (CCs) with each other for SRS bandwidth aggregation; receiving downlink control information (DCI) triggering aperiodic SRS transmission on a first SRS resource set; and performing the aperiodic SRS transmission. Based on that the first SRS resource set on which the aperiodic SRS transmission is triggered is one of the plurality of SRS resource sets linked through the configuration information, the aperiodic SRS transmission may be performed on all of the plurality of CCs in which the plurality of SRS resource sets are configured.

Based on that the first SRS resource set is configured in a first CC among the plurality of CCs and that a second SRS resource set linked with the first SRS resource set is configured in a second CC among the plurality of CCs, the aperiodic SRS transmission may be performed through the SRS bandwidth aggregation on the first SRS resource set on the first CC and the second SRS resource set on the second CC.

The UE may maintain phase continuity for the aperiodic SRS transmission performed on the plurality of SRS resource sets linked for the SRS bandwidth aggregation.

The plurality of SRS resource sets linked for the SRS bandwidth aggregation may be related to positioning of the UE.

The configuration information for linking the plurality of SRS resource sets may be received through radio resource control (RRC) signaling.

The plurality of SRS resource sets linked for the SRS bandwidth aggregation have a same comb type, a same SRS symbol length, and a same SRS symbol position.

The UE may not assume that SRS resource sets different in at least one of a comb type, an SRS symbol length, or an SRS symbol position are linked with each other for the SRS bandwidth aggregation.

Same power parameters may be configured for the plurality of SRS resource sets linked for the SRS bandwidth aggregation.

In another aspect of the present disclosure, provided herein is a processor-readable recording medium having recorded thereon a program for executing the SRS transmission method described above.

In another aspect of the present disclosure, provided herein is a device for wireless communication. The device may include: a memory configured to store instructions; and a processor configured to perform operations by executing the instructions. The operations of the processor may include: receiving configuration information for linking a plurality of SRS resource sets on a plurality of CCs for SRS bandwidth aggregation; receiving DCI triggering aperiodic SRS transmission on a first SRS resource set; and performing the aperiodic SRS transmission. Based on that the first SRS resource set on which the aperiodic SRS transmission is triggered is one of the plurality of SRS resource sets linked through the configuration information, the aperiodic SRS transmission may be performed on all of the plurality of CCs in which the plurality of SRS resource sets are configured.

The device may further include a transceiver.

The device may be a UE operating in a wireless communication system.

The device may be a processing device configured to control a UE operating in a wireless communication system.

In another aspect of the present disclosure, provided herein is a method of receiving an SRS by a base station (BS) in a wireless communication system. The method includes: transmitting, to a UE, configuration information for linking a plurality of SRS resource sets on a plurality of CCs for SRS bandwidth aggregation; transmitting, to the UE, DCI triggering aperiodic SRS transmission on a first SRS resource set; and receiving an aperiodic SRS from the UE. Based on that the first SRS resource set on which the aperiodic SRS transmission is triggered is one of the plurality of SRS resource sets linked through the configuration information, the aperiodic SRS may be received on all of the plurality of CCs in which the plurality of SRS resource sets are configured.

In another aspect of the present disclosure, provided herein is a processor-readable recording medium having recorded thereon a program for executing the SRS reception method described above.

In a further aspect of the present disclosure, provided herein is a BS for wireless communication. The BS includes: a memory configured to store instructions; and a processor configured to perform operations by executing the instructions. The operations of the processor may include: transmitting, to a UE, configuration information for linking a plurality of SRS resource sets on a plurality of CCs for SRS bandwidth aggregation; transmitting, to the UE, DCI triggering aperiodic SRS transmission on a first SRS resource set; and receiving an aperiodic SRS from the UE. Based on that the first SRS resource set on which the aperiodic SRS transmission is triggered is one of the plurality of SRS resource sets linked through the configuration information, the aperiodic SRS may be received on all of the plurality of CCs in which the plurality of SRS resource sets are configured.

## ADVANTAGEOUS EFFECTS

According to an embodiment of the present disclosure, a signal can be more accurately and efficiently transmitted or received in a wireless communication system.

The effect of the disclosure is not limited to this, and other advantageous effects may be inferred from the disclosed embodiments.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIG. 13 is a diagram for explaining sounding reference signal (SRS) bandwidth aggregation according to an embodiment.

FIG. 14 is a diagram for explaining semi-persistent SRS transmission in a wireless communication system according to an embodiment.

FIG. 15 is a diagram for explaining non-periodic SRS transmission in a wireless communication system according to an embodiment.

FIG. 16 illustrates a flowchart of a method by which a UE transmits an SRS according to an embodiment.

FIG. 17 illustrates a flowchart of a method by which a BS receives an SRS according to an embodiment.

FIGS. 18 to 21 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service

- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

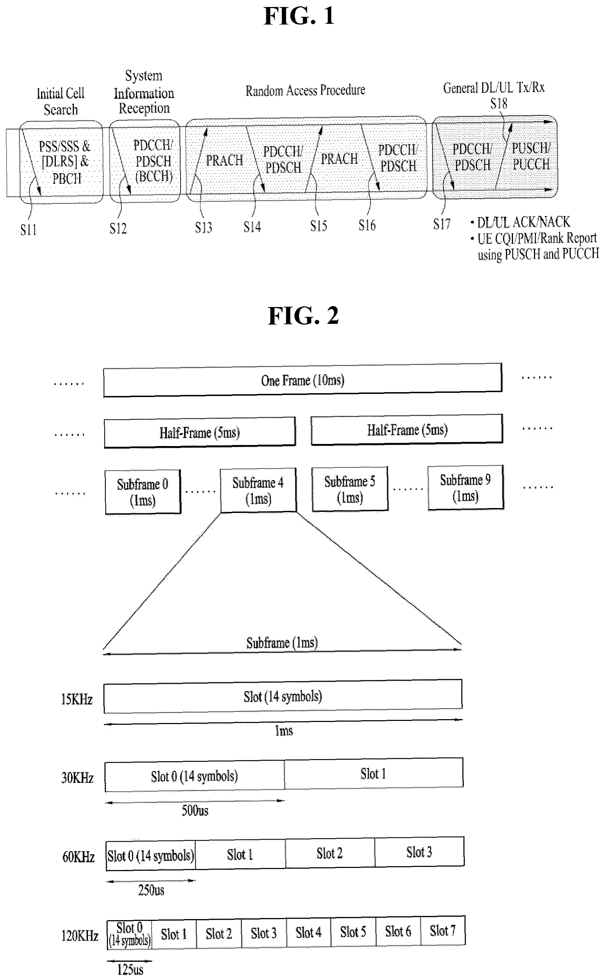

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15 \cdot u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15 \cdot 2^{u}$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of sub frames, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

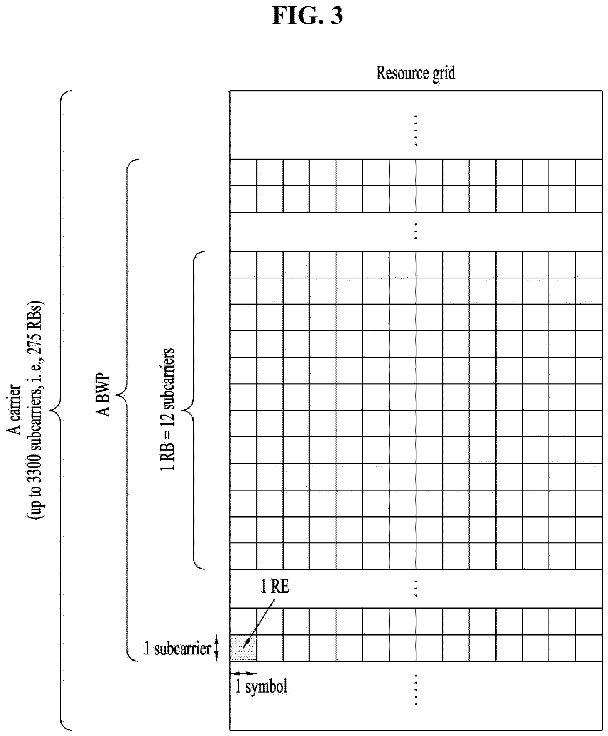

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

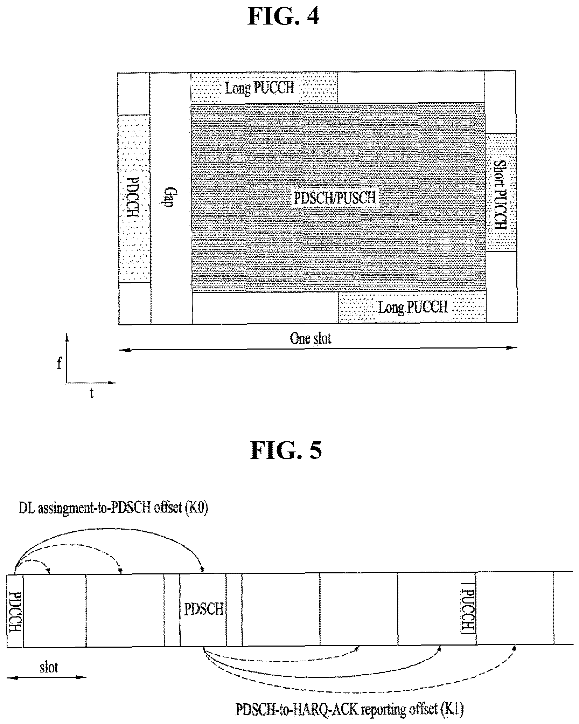

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

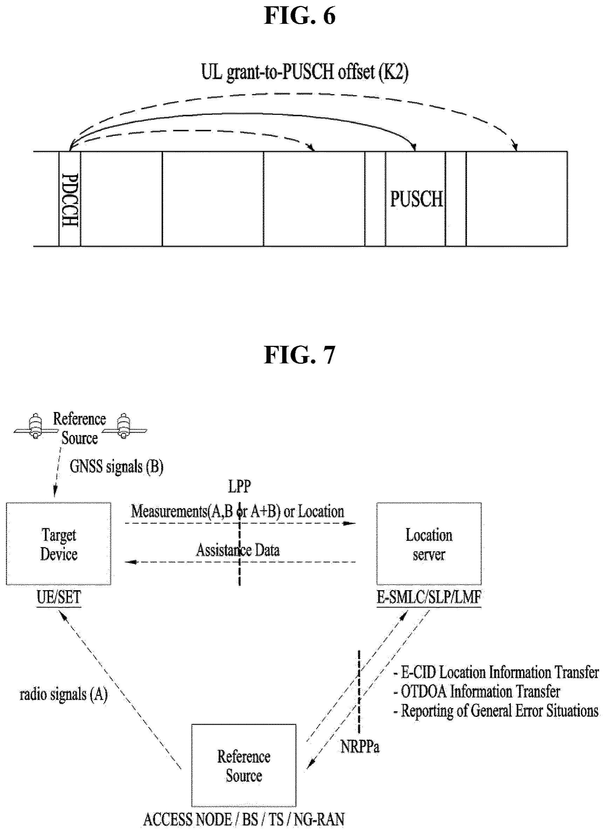

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

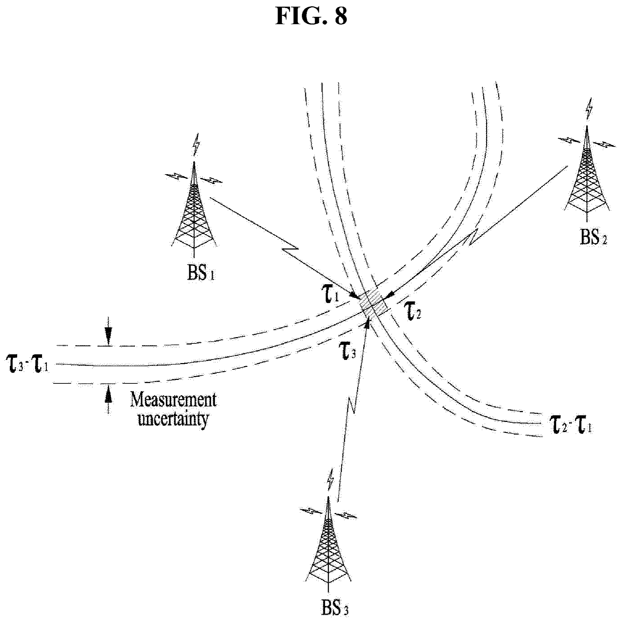

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi,_1 = \frac{\sqrt{(x_t-x_i)^2+(y_t-y_i)^2}}{c} - \frac{\sqrt{(x_t-x_1)^2+(y_t-y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i-T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

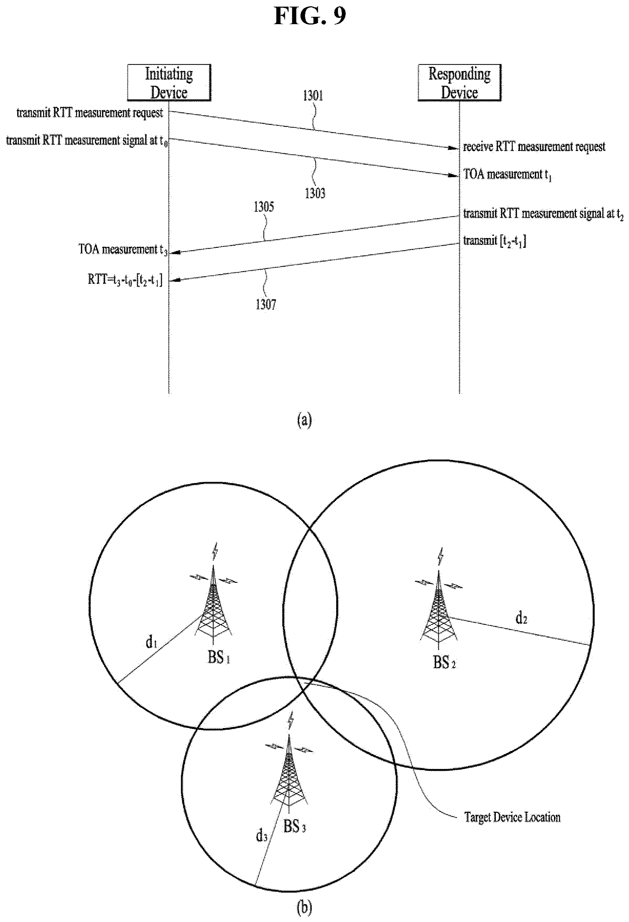

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN Positioning Architecture and Procedures

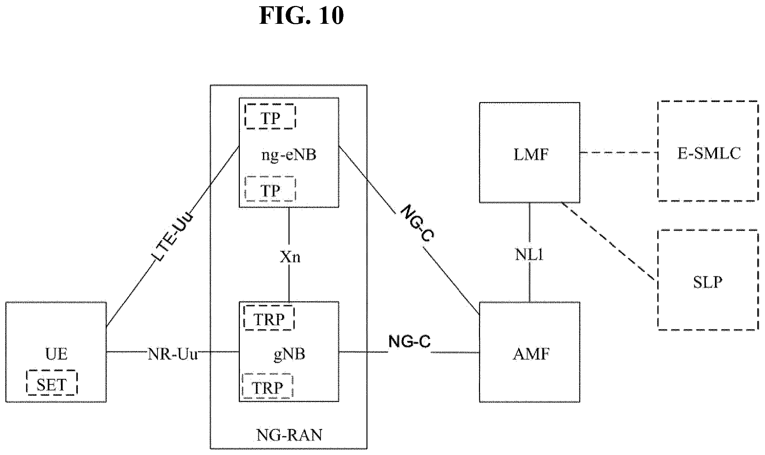

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

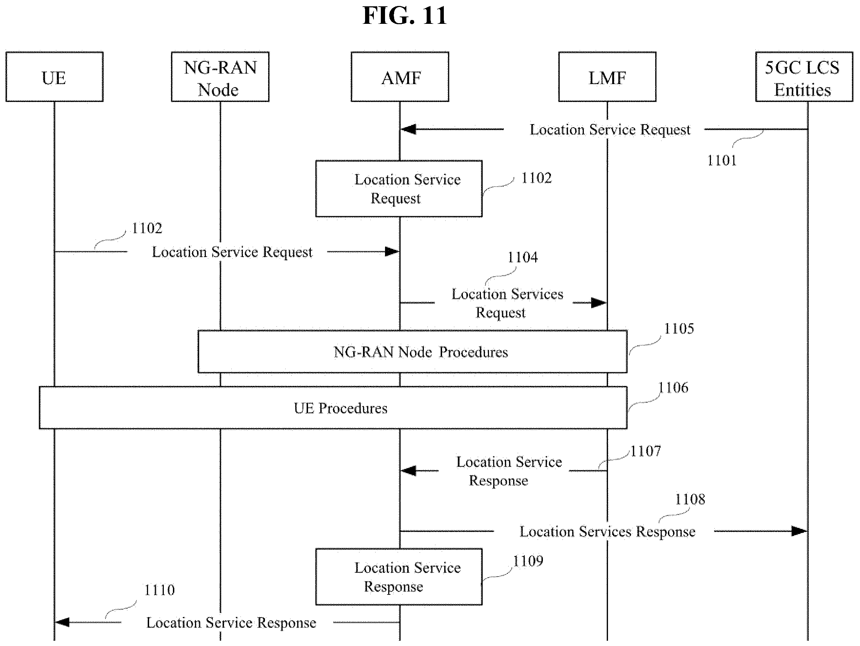

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## SRS (Sounding Reference Signal) for Positioning

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

To prevent confusion between the Rel. 15 SRS and SRS for positioning, the SRS for positioning will be referred to as an SRS-p. Unless otherwise specified, the SRS may be interpreted to mean the SRS-p in the newly proposed methods in this specification.

If a higher layer parameter SRS-PosResource is configured for the SRS (i.e., SRS-p) and a higher layer parameter SpatialRelationInfoPos is configured, the ID of a configuration field of a reference RS is provided. The reference RS may be an SRS, CSI-RS, SS/PBCH block configured by the higher layer parameter SRS-Resource or SRS-PosResource or a DL PRS configured in the serving cell or SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.

In the RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of operation on the same carrier, if the SRS-p conflicts with a scheduled PUSCH, the SRS-p is dropped on symbols where the collision occurs.

The UE does not expect that SRS-PosResource will be configured on the carrier of the serving cell with a slot format consisting of DL/UL symbols that are not configured for PUSCH/PUCCH transmission.

Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

## ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

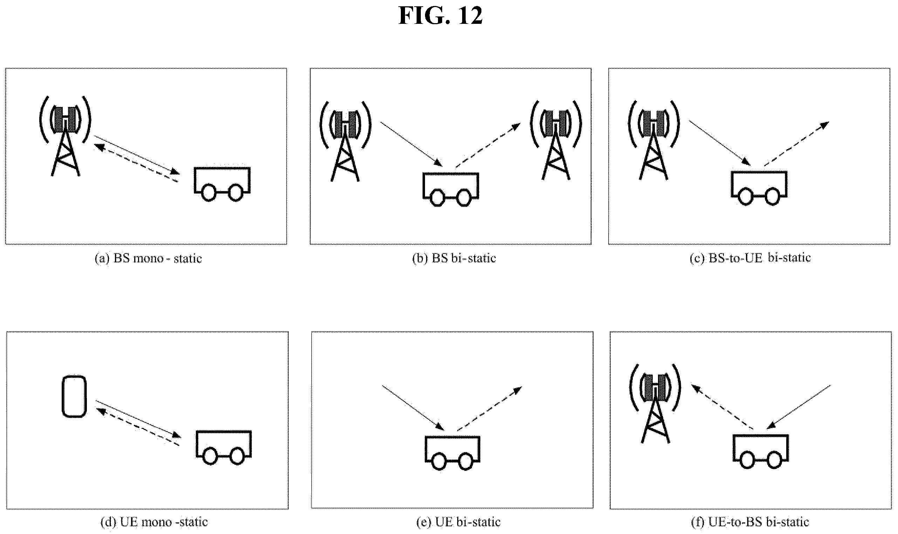

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information.

For example, the following scenarios: intrusion detection in indoor/outdoor environments, tracking the position of an unmanned aerial vehicle (UAV) or automated guided vehicle (AGV), and supporting autonomous driving may be considered.

(2) Environment monitoring: This scenario aims to collect information on the surrounding environment of transmitting/receiving nodes. For example, the following scenarios: rainfall observation and flood detection may be considered.

(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

## SRS BW Aggregation for Positioning

Hereinafter, the operations of the BS and UE for applying bandwidth (BW) aggregation to transmission and reception of an SRS-p as well as signaling methods therefor will be described.

The proposals for SRS-p BW aggregation described below may also be applicable to the aforementioned ISAC environment.

In NR, the introduction of BW aggregation is being discussed in Rel-18 as a method of improving positioning accuracy. BW aggregation is a technique that increases the total BW size used for positioning by stacking RSs transmitted on one or more carriers. To apply BW aggregation, conditions such as phase continuity between transmitted RSs should be satisfied. Accordingly, in Rel-18, only cases where the transmission and reception conditions of an RS using the same antenna are satisfied on intra-band contiguous carriers are being considered.

For example, to satisfy the phase continuity condition, RS(s) targeted for BW aggregation may need to be transmitted and received through a single radio frequency (RF) chain. For example, in the case of a DL RS, the UE may aggregate positioning frequency layers (PFLs). In this case, all targeted PFLs need to be transmitted through one transmission chain of the TRP and the same antenna reference point. In the case of a UL RS, the TRP may aggregate PFLs. In this scenario, all targeted PFLs need to be transmitted through one transmission chain of the UE and the same antenna reference point.

While the present disclosure focuses on BW aggregation for an SRS-p based on UL positioning in 3GPP NR, the proposed methods are not limited thereto and may generally be applied to other UL or DL signal BW aggregation scenarios. In addition, the proposed methods assumes intra-band contiguous carriers, but the proposed methods are not limited thereto and may be applied to BW aggregation scenarios where different transmission and reception assumptions are applied. The proposed methods are not limited to 3GPP NR systems and may generally be applied to other common communication systems such as LTE or 6G as long as BW aggregation is performed on an RS such as an SRS-p or similar operations are used. The proposed methods may be applied to all types of transmission and reception methods and positioning techniques expected by both the BS and UE.

The methods proposed in the present disclosure may be implemented independently without additional combinations or implemented in a combined form by combining one or more methods. Some of the terms, symbols, sequences, and so on used herein may be replaced with other terms, symbols, sequences, and so on.

Hereinafter, the operations of the UE and BS for supporting BW aggregation of SRSs-p, which are transmitted and received through the same antenna, under the condition of intra-band contiguous carriers as well as signaling methods therefor will be described. The condition of intra-band contiguous carriers mean that SRS-p BW aggregation is applied to (at least some/all) consecutive carriers among a plurality of carriers included in a band.

To support SRS-p BW aggregation, both the BS and UE should have consistent information on whether the BW aggregation is applied to SRS-p transmission and reception. To this end, the BS may provide the UE with information on a pair of SRS-p resources where the BW aggregation is required. The information on the pair of SRS-p resources may consist of a set of SRSs-p transmitted on two or more different carriers. If SRSs-p that are designated as the SRS-p resource pair and satisfy specific conditions is transmitted, the UE may be configured to apply the BW aggregation to the SRS-p transmission. The SRS-p BW aggregation may refer to an operation that satisfies the following conditions: the phase continuity of the SRS-p is ensured, the same timing advance (TA) is applied, and/or the same power level is used. To this end, the BS may provide the UE with configuration information on the SRS-p resource pair through higher layer signaling such as SIB or RRC. Subsequently, the BS may determine whether the BW aggregation is applied to the SRS-p transmitted by the UE based on the provided/indicated information and reflect the result in performing measurement. The UE may receive the information and determine to perform the BW aggregation for the SRS-p transmission where the SRS-p resource pair is configured/indicated.

To configure the SRS-p resource pair, at least some of the following may be applied.

- For example, the SRS-p resource pair may be configured on an SRS-p resource basis or on an SRS-p resource set basis. For instance, SRS-p resources or SRS-p resource sets on different carriers may be defined as the SRS-p resource pair. As a specific implementation example, each SRS-p resource or SRS-p resource set may include information on an ID for providing information on the SRS-p resource pair, and SRS-p resources or SRS-p resource sets on different carriers with the same ID information may be defined as the SRS-p resource pair. Configuring the SRS-p resource pair on an SRS-p resource basis or on an SRS-p resource set basis has advantages in terms of flexibility in the BS configuration.

- For example, the SRS-p resource pair may be configured on a BWP basis or on a carrier basis. For example, the SRS-p resource pair may be configured on different carriers or BWPs belonging to different carriers. As a specific implementation example, configuration information on each BWP or carrier may include information on an ID for indicating the configuration of the SRS-p resource pair. The UE may expect that the SRS-p resource pair is assumed on different carriers or BWPs belonging to different carriers with the same ID. Configuring the SRS-p resource pair on a BWP basis or on a carrier basis has advantages of reducing signaling overhead for the configuration of the SRS-p resource pair and allowing multiple SRS resource sets to be configured as the SRS-p resource pair through one-shot signaling.

As an additional condition, the UE may be determined or configured to perform the BW aggregation only on SRS-p resources (sets) belonging to a BWP or carrier set as the SRS-p resource pair if specific conditions are satisfied. For example, the specific conditions may include that the BW aggregation is performed only for SRS-p resources (sets) where the same comb type, symbol length, and/or location are assumed. Otherwise, both the BS and UE may not perform the BW aggregation based on the SRS-p resource pair. Therefore, the UE may expect that the same comb type, symbol length (e.g., number of symbols, SCS, etc.), and/or location (e.g., periodicity and offset, start symbol, etc.) will be configured for the SRS-p resources (sets) belonging to the SRS-p resource pair. In other words, the UE may assume that the SRS-p resources (sets) configured with the same comb type, symbol length (e.g., number of symbols, SCS, etc.), and/or location (e.g., periodicity and offset, start symbol, etc.) are designated as the SRS-p resource pair for the BW aggregation. Otherwise, the UE may not assume the SRS-p resource pair for the BW aggregation.

Upon receiving the configuration information on the SRS-p resource pair, the UE may perform transmission on the SRS-p resource pair (e.g., SRS transmission on SRS-p resource sets belonging to the SRS-p resource pair). In the case of semi-persistent and aperiodic transmission on SRS-p resources (sets) in the prior art, transmission on each SRS-p resource (set) may be performed for each BWP (i.e., BWP of each CC). Even when the SRS-p resource pair is used, activation/triggering of SRS-p resources (sets) may be independently indicated for each BWP (and/or each CC) in the same way. If the transmission time coincides, the SRS-p where the BW aggregation is applied may be transmitted. This has advantages of maintaining an independent indication method for each SRS-p resource (set) and obtaining the benefit of the BW aggregation gain for the SRS-p resource pair if the conditions for simultaneous transmission are met. The activation indication may be a MAC CE command to activate semi-persistent transmission. The triggering indication may be a DCI field for aperiodic SRS transmission (i.e., information on DL/UL grant DCI that indicates SRS resource sets and requesting aperiodic SRS transmission).

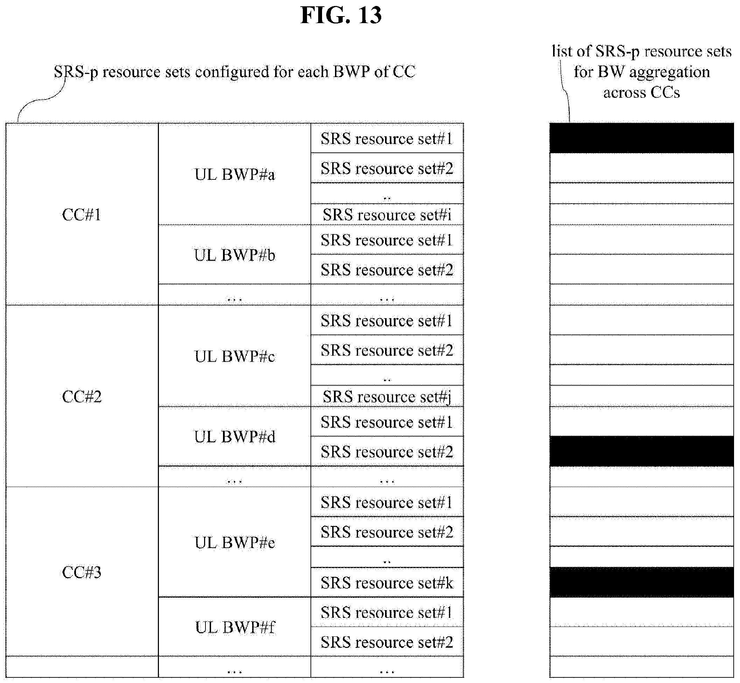

For example, when one of the SRS-p resources (sets) set as the SRS-p resource pair in a specific BWP/CC is activated/triggered in the form of semi-persistent and aperiodic transmission, the UE may be configured to transmit all SRS-p resources (sets) in the SRS-p resource pair. For example, referring to FIG. 13, an SRS resource set configuration may be provided for each UL BWP of each CC, and each SRS resource set may include a plurality of SRS resources. The SRS resource set configuration may include information indicating that the corresponding SRS resource set is for positioning and information indicating the type of the corresponding SRS resource set among the following types: aperiodic/periodic/semi-persistent. A list of SRS-p resource sets for BW aggregation refers to the SRS-p resource set pair described above, and it is assumed that one list is configured across CCs. For example, in FIG. 13, the list includes i) SRS resource set #1 of UL BWP #a of CC #1, ii) SRS resource set #2 of UL BWP #d of CC #2, and iii) SRS resource set #k of UL BWP #e of CC #3. For convenience of explanation, it is assumed that the SRS resource sets included in the list satisfy the conditions for BW aggregation (e.g., comb size, symbol length, symbol location, etc.). For example, assuming that the semi-persistent type is configured, if a MAC CE for SRS activation is received for i) SRS resource set #1 of UL BWP #a of CC #1, the UE may activate i) SRS resource set #1 of UL BWP #a of CC #1, ii) SRS resource set #2 of UL BWP #d of CC#2, and iii) SRS resource set #k of UL BWP #e of CC #3 together. In addition, the UE maintain phase continuity across i) SRS resource set #1 of UL BWP #a of CC#1, ii) SRS resource set #2 of UL BWP #d of CC#2, and iii) SRS resource set #k of UL BWP #e of CC #3 and transmit a BW aggregated SRS-p thereon. For example, assuming the aperiodic type is configured, if DL/UL grant DCI requesting SRS transmission on i) i) SRS resource set #1 of UL BWP #a of CC#1 is received, the UE maintain the phase continuity across i) SRS resource set #1 of UL BWP #a of CC#1, ii) SRS resource set #2 of UL BWP #d of CC#2, and iii) SRS resource set #k of UL BWP #e of CC #3 and transmit the BW aggregated SRS-p thereon.

Similarly, if deactivation of a semi-persistent SRS-p is indicated, the UE may be configured to stop transmission on all semi-persistent SRS-p resource pairs having the SRS-p resource pair relationship with the deactivated SRS-p resource set.

As described above, the UE performs the BW aggregation for the SRS-p resource pair. The proposed method has advantages of reducing signaling overhead for transmitting indications when simultaneous transmission of SRS-p resource sets belonging to the SRS-p resource pair is required to gain benefits from the BW aggregation.

For example, a MAC CE or DCI used for activating/triggering the SRS-p resource pair may include information indicating whether simultaneous transmission on the SRS-p resource pair is required. Such simultaneous scheduling may also be determined to be applied only when there is a separate indication.

The BW aggregation is a technique for enhancing positioning accuracy. The BS and UE need to perform enforced operations to transmit and receive an RS having the BW aggregation applied, which may potentially impair the efficiency of transmitting and receiving other signals/channels. To address these issues, the BS may be configured to provide the UE with configuration information on the SRS-p resource pair in advance and separately provide an indication for applying the BW aggregation to the SRS-p resource pair. When the UE receives a BW aggregation activation indication for the SRS-p resource pair via a MAC CE, the UE may perform the BW aggregation on SRS-p resources to be transmitted in the future if the SRS-p resource pair is satisfied. When the UE does not receive activation for the SRS-p resource pair or receives a deactivation indication via a MAC CE, the UE may be configured not to perform the BW aggregation on the SRS-p resource pair.

Alternatively, if the BW aggregation indication for the SRS-p resource pair is triggered by DCI, the UE may be configured to perform the BW aggregation on an aperiodic SRS-p resource pair indicated by the same DCI. Upon receiving DCI with no BW aggregation trigger indication for the SRS-p resource pair, the UE does not need to apply the BW aggregation to transmission on the SRS-p resource pair.

Alternatively, if the BW aggregation indication for the SRS-p resource pair is triggered by DCI, the UE may be configured to perform the BW aggregation for an SRS-p resource pair to be transmitted at a point in time or within a period of time associated with the corresponding DCI. In this case, the SRS-p resource pair transmitted at the point in time or within the period of time may also include an SRS-p resource pair at a different point in time that is not scheduled by the corresponding DCI.

In the above explanation, the number N (N > 1) of SRS-p resources/resource sets belonging to the SRS-p resource pair may vary depending on RRC configuration information. The term "pair" is intended to prevent confusion with an SRS resource "set", which is an RRC information element (IE) defined in the current NR standard, and thus N is not limited to N = 2. In other words, while N may be 2, the present disclosure is not limited thereto, and N may also be set to 3 or more. The term "SRS-p resource pair" may also be expressed using other terminologies such as a BW aggregation SRS-p resource list/group.

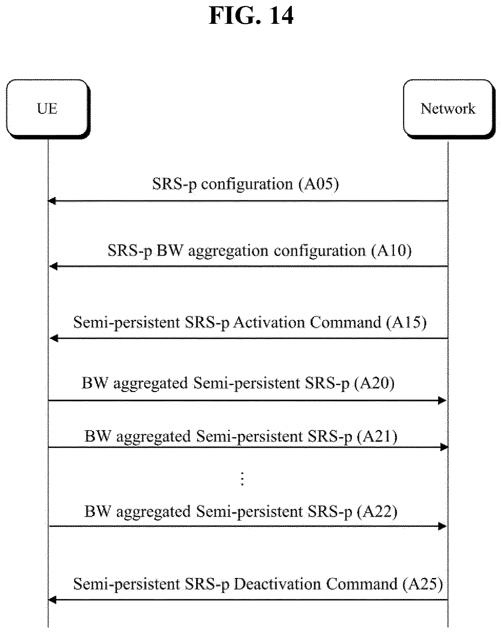

FIG. 14 is a diagram for explaining semi-persistent SRS transmission in a wireless communication system according to an embodiment.

Referring to FIG. 14, a UE receives configuration information regarding an SRS-p for positioning from a network (A05). The configuration information regarding the SRS-p may be received via RRC signaling. The configuration information may include SRS resource set configuration information. The SRS resource set information may include information indicating the type of a corresponding SRS resource set among the following types: aperiodic/periodic/semi-persistent. For convenience of explanation, the semi-persistent type is assumed in FIG. 14. The configuration information regarding the SRS-p may be provided for each UL BWP of each CC.

The UE may receive configuration information regarding SRS-p BW aggregation from the network (A10). The configuration information regarding the SRS-p BW aggregation may be received via RRC signaling. The configuration information regarding the SRS-p BW aggregation may include a list of SRS-p resource sets for BW aggregation. The list of SRS-p resource sets for BW aggregation may be configured across a plurality of CCs.

The UE may receive an activation command for a semi-persistent SRS-p from the network (A15). The activation command for the semi-persistent SRS-p may be received via MAC signaling.

For convenience of explanation, it is assumed that the activation command for the semi-persistent SRS-p indicates the activation of one of the SRS-p resource sets included in the list. Based on that the activation of one of the SRS-p resource sets included in the list is indicated, the UE may activate the SRS-p resource sets included in the list across all CCs.

Based on the activation of the SRS-p resource sets, the UE may periodically transmit BW-aggregated semi-persistent SRSs-p (A20, A21, and A22).

The UE may receive a deactivation command for the semi-persistent SRS-p from the network (A25). The deactivation command for the semi-persistent SRS-p may be received via MAC signaling. If the deactivation command for the semi-persistent SRS-p indicates the deactivation of one of the SRS-p resource sets included in the list, the UE may deactivate all SRS-p resource sets included in the list across all CCs.

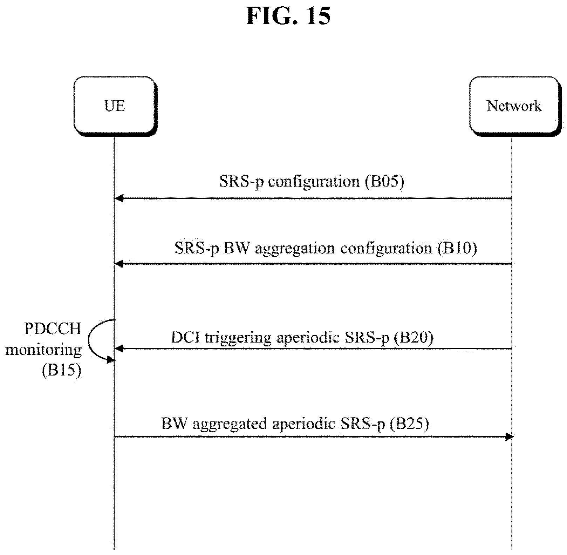

FIG. 15 is a diagram for explaining non-periodic SRS transmission in a wireless communication system according to an embodiment.

Referring to FIG. 15, a UE receives configuration information regarding an SRS-p for positioning from a network (B05). The configuration information regarding the SRS-p may be received via RRC signaling. The configuration information regarding the SRS-p may include SRS resource set configuration information, and the SRS resource set information may include information indicating the type of a corresponding SRS resource set among the following types: aperiodic/periodic/semi-persistent. For convenience of explanation, the aperiodic type is assumed in FIG. 15. The configuration information regarding the SRS-p may be provided for each UL BWP of each CC.

The UE may receive configuration information regarding SRS-p BW aggregation from the network (B10). The configuration information regarding the SRS-p BW aggregation may be received via RRC signaling. The configuration information regarding the SRS-p BW aggregation may include a list of SRS-p resource sets for BW aggregation. The list of SRS-p resource sets for BW aggregation may be configured across a plurality of CCs.

The UE may receive DCI triggering an aperiodic SRS-p by monitoring a PDCCH on at least one CC (B15). It is assumed that the DCI is received on a first CC (B20).

For convenience of explanation, it is assumed that the DCI triggers aperiodic SRS-p transmission on a first SRS-p resource set, which is one of the SRS-p resource sets included in the list.

Based on that the aperiodic SRS-p transmission on one of the SRS-p resource sets included in the list is triggered, the UE can transmit BW-aggregated semi-persistent SRSs-p not only on the first SRS-p resource set on a first CC but also on all SRS-p resource sets on all CCs included in the list (B25).

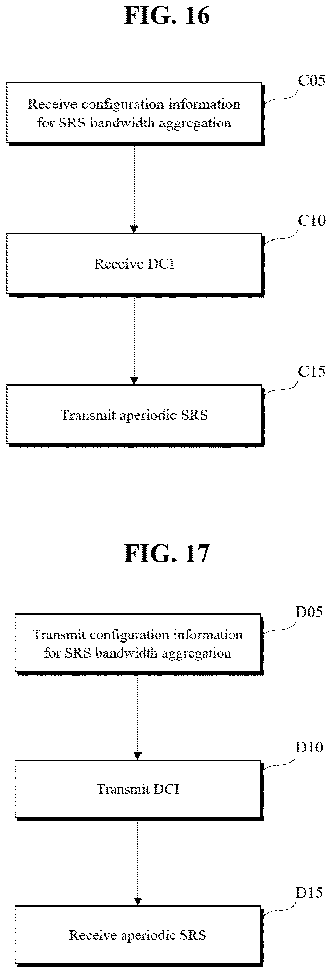

FIG. 16 illustrates a flowchart of a method by which a UE transmits an SRS according to an embodiment.

Referring to FIG. 16, the UE may receive configuration information for linking a plurality of SRS resource sets on a plurality of CCs with each other for SRS bandwidth aggregation (C05).

The UE may receive DCI triggering aperiodic SRS transmission on a first SRS resource set (C10).

The UE may perform the aperiodic SRS transmission (C15). Based on that the first SRS resource set on which the aperiodic SRS transmission is triggered is one of the plurality of SRS resource sets linked through the configuration information, the UE may perform the aperiodic SRS transmission on all of the plurality of CCs in which the plurality of SRS resource sets are configured.

Based on that the first SRS resource set is configured in a first CC among the plurality of CCs and that a second SRS resource set linked with the first SRS resource set is configured in a second CC among the plurality of CCs, the aperiodic SRS transmission may be performed through the SRS bandwidth aggregation on the first SRS resource set on the first CC and the second SRS resource set on the second CC.

The UE may maintain phase continuity for the aperiodic SRS transmission performed on the plurality of SRS resource sets linked for the SRS bandwidth aggregation.

The plurality of SRS resource sets linked for the SRS bandwidth aggregation may be related to positioning of the UE.

The configuration information for linking the plurality of SRS resource sets may be received through RRC signaling.

The plurality of SRS resource sets linked for the SRS bandwidth aggregation have a same comb type (e.g., size), a same SRS symbol length, and a same SRS symbol position.

The UE may not assume that SRS resource sets different in at least one of a comb type, an SRS symbol length, or an SRS symbol position are lined with each other for the SRS bandwidth aggregation.

Same power parameters may be configured for the plurality of SRS resource sets linked for the SRS bandwidth aggregation.

FIG. 17 illustrates a flowchart of a method by which a BS receives an SRS according to an embodiment.

Referring to FIG. 17, the BS may transmit, to a UE, configuration information for linking a plurality of SRS resource sets on a plurality of CCs with each other for SRS bandwidth aggregation (D05).

The BS may transmit, to the UE, DCI triggering aperiodic SRS transmission on a first SRS resource set (D10).

The UE may receive an aperiodic SRS from the UE (D15). Based on that the first SRS resource set on which the aperiodic SRS transmission is triggered is one of the plurality of SRS resource sets linked through the configuration information, the aperiodic SRS may be received on all of the plurality of CCs in which the plurality of SRS resource sets are configured.

Based on that the first SRS resource set is configured in a first CC among the plurality of CCs and that a second SRS resource set linked with the first SRS resource set is configured in a second CC among the plurality of CCs, the aperiodic SRS reception may be performed through the SRS bandwidth aggregation on the first SRS resource set on the first CC and the second SRS resource set on the second CC.

Phase continuity may be maintained for the aperiodic SRS reception performed on the plurality of SRS resource sets linked for the SRS bandwidth aggregation.

The plurality of SRS resource sets linked for the SRS bandwidth aggregation may be related to positioning of the UE.

The configuration information for linking the plurality of SRS resource sets may be transmitted through RRC signaling.

The plurality of SRS resource sets linked for the SRS bandwidth aggregation have a same comb type (e.g., size), a same SRS symbol length, and a same SRS symbol position.

SRS resource sets different in at least one of a comb type, an SRS symbol length, or an SRS symbol position may not be linked with each other for the SRS bandwidth aggregation.

Same power parameters may be configured for the plurality of SRS resource sets linked for the SRS bandwidth aggregation.

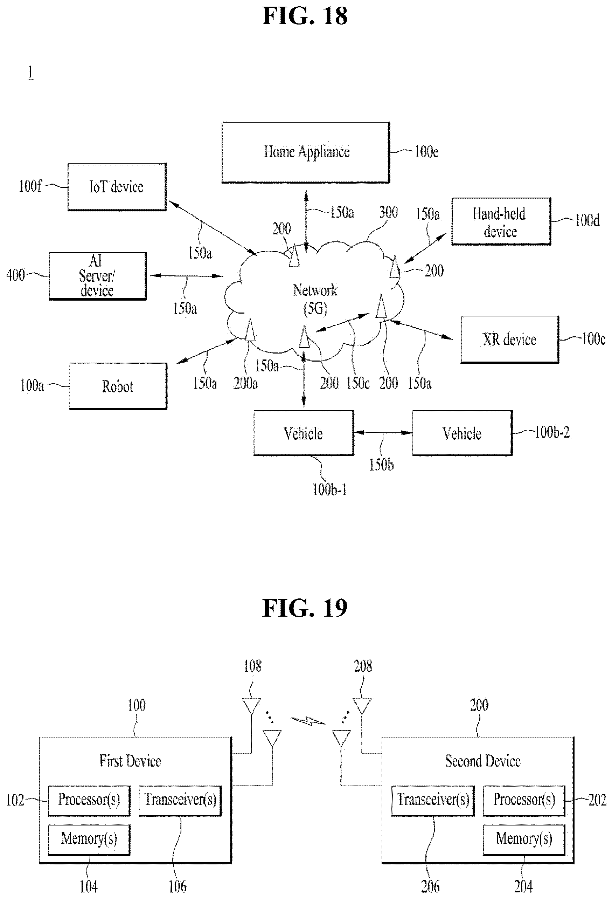

FIG. 18 illustrates a communication system 1 applied to the present disclosure.

Referring to FIG. 18, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 19 illustrates wireless devices applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

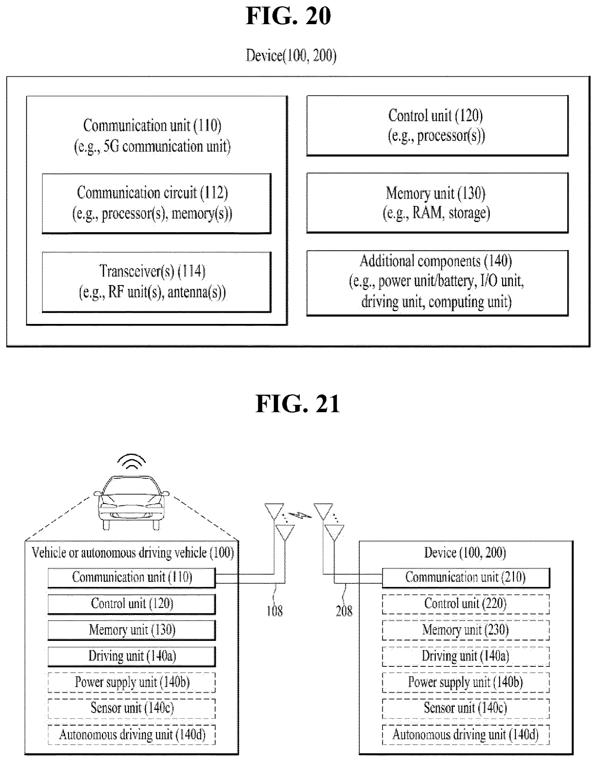

FIG. 20 illustrates another example of a wireless device applied to the present disclosure. The wireless device may be implemented in various forms according to a use-case/service (refer to FIG. 18).

Referring to FIG. 20, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 21 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 21, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

The present disclosure is applicable to UEs, BSs, or other apparatuses in a wireless mobile communication system.

**Claims**

1. A method of transmitting a sounding reference signal (SRS) by a user equipment (UE) in a wireless communication system, the method comprising:

    receiving configuration information for linking a plurality of SRS resource sets on a plurality of component carriers (CCs) with each other for SRS bandwidth aggregation;
    receiving downlink control information (DCI) triggering aperiodic SRS transmission on a first SRS resource set;

and
performing the aperiodic SRS transmission,
wherein, based on that the first SRS resource set on which the aperiodic SRS transmission is triggered is one of the plurality of SRS resource sets linked through the configuration information, the aperiodic SRS transmission is performed on all of the plurality of CCs in which the plurality of SRS resource sets are configured.

2. The method of claim 1, wherein, based on that the first SRS resource set is configured in a first CC among the plurality of CCs and that a second SRS resource set linked with the first SRS resource set is configured in a second CC among the plurality of CCs, the aperiodic SRS transmission is performed through the SRS bandwidth aggregation on the first SRS resource set on the first CC and the second SRS resource set on the second CC.

3. The method of claim 1, wherein the UE maintains phase continuity for the aperiodic SRS transmission performed on the plurality of SRS resource sets linked for the SRS bandwidth aggregation.

4. The method of claim 1, wherein the plurality of SRS resource sets linked for the SRS bandwidth aggregation are related to positioning of the UE.

5. The method of claim 1, wherein the configuration information for linking the plurality of SRS resource sets is received through radio resource control (RRC) signaling.

6. The method of claim 1, wherein the plurality of SRS resource sets linked for the SRS bandwidth aggregation have a same comb type, a same SRS symbol length, and a same SRS symbol position.

7. The method of claim 1, wherein the UE does not assume that SRS resource sets different in at least one of a comb type, an SRS symbol length, or an SRS symbol position are linked with each other for the SRS bandwidth aggregation.

8. The method of claim 1, wherein same power parameters are configured for the plurality of SRS resource sets linked for the SRS bandwidth aggregation.

9. A processor-readable recording medium having recorded thereon a program for performing the method of claim 1.

10. A device for wireless communication, the device comprising:

a memory configured to store instructions; and
a processor configured to perform operations by executing the instructions,
wherein the operations of the processor comprise:

receiving configuration information for linking a plurality of sounding reference signal (SRS) resource sets on a plurality of component carriers (CCs) with each other for SRS bandwidth aggregation;
receiving downlink control information (DCI) triggering aperiodic SRS transmission on a first SRS resource set; and
performing the aperiodic SRS transmission, and
wherein, based on that the first SRS resource set on which the aperiodic SRS transmission is triggered is one of the plurality of SRS resource sets linked through the configuration information, the aperiodic SRS transmission is performed on all of the plurality of CCs in which the plurality of SRS resource sets are configured.

11. The device of claim 10, further comprising:

a transceiver,
wherein the device is a user equipment (UE) operating in a wireless communication system.

12. The device of claim 10, wherein the device is a processing device configured to control a user equipment (UE) to operate in a wireless communication system.

13. A method of receiving a sounding reference signal (SRS) by a base station (BS) in a wireless communication system, the method comprising:

transmitting, to a user equipment (UE), configuration information for linking a plurality of SRS resource sets on a plurality of component carriers (CCs) with each other for SRS bandwidth aggregation;
transmitting, to the UE, downlink control information (DCI) triggering aperiodic SRS transmission on a first SRS resource set; and
receiving an aperiodic SRS from the UE,
wherein, based on that the first SRS resource set on which the aperiodic SRS transmission is triggered is one of the plurality of SRS resource sets linked through the configuration information, the aperiodic SRS is received on all of the plurality of CCs in which the plurality of SRS resource sets are configured.

14. A processor-readable recording medium having recorded thereon a program for performing the method of claim 13.

15. A base station (BS) for wireless communication, the BS comprising:

a memory configured to store instructions; and
a processor configured to perform operations by executing the instructions,
wherein the operations of the processor comprise:

transmitting, to a user equipment (UE), configuration information for linking a plurality of sounding reference signal (SRS) resource sets on a plurality of component carriers (CCs) with each other for SRS bandwidth aggregation;
transmitting, to the UE, downlink control information (DCI) triggering aperiodic SRS transmission on a first SRS resource set; and
receiving an aperiodic SRS from the UE,
wherein, based on that the first SRS resource set on which the aperiodic SRS transmission is triggered is one of the plurality of SRS resource sets linked through the configuration information, the aperiodic SRS is received on all of the plurality of CCs in which the plurality of SRS resource sets are configured.

# FIG. 1

| Initial Cell Search | System Information Reception | Random Access Procedure | | | | General DL/UL Tx/Rx S18 | |
|---|---|---|---|---|---|---|---|
| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |
| S11 | S12 | S13 | S14 | S15 | S16 | S17 | · DL/UL ACK/NACK · UE CQI/PMI/Rank Report using PUSCH and PUCCH |

# FIG. 2

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

Long PUCCH

PDCCH

Gap

PDSCH/PUSCH

Short PUCCH

Long PUCCH

One slot

f

t

# FIG. 5

DL assingment-to-PDSCH offset (K0)

PDCCH

PDSCH

PUCCH

slot

PDSCH-to-HARQ-ACK reporting offset (K1)

# FIG. 6

UL grant-to-PUSCH offset (K2)

PDCCH

PUSCH

# FIG. 7

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

# FIG. 8

# FIG. 9

| Initiating Device | | Responding Device |
|---|---|---|
| transmit RTT measurement request | 1301 | |
| transmit RTT measurement signal at $t_0$ | | receive RTT measurement request |
| | 1303 | TOA measurement $t_1$ |
| | 1305 | transmit RTT measurement signal at $t_2$ |
| TOA measurement $t_3$ | | transmit $[t_2 - t_1]$ |
| RTT = $t_3 - t_0 - [t_2 - t_1]$ | 1307 | |

(a)

$d_1$  BS$_1$

$d_2$  BS$_2$

$d_3$  BS$_3$

Target Device Location

(b)

**FIG. 10**

# FIG. 11

UE     NG-RAN Node     AMF     LMF     5GC LCS Entities

Location Service Request   1101

Location Service Request   1102

1102   Location Service Request

1104   Location Services Request

NG-RAN Node Procedures   1105

UE Procedures   1106

Location Service Response   1107

Location Services Response   1108

Location Service Response   1109

1110   Location Service Response

EP 4 668 642 A1

# FIG. 12

(a) BS mono - static

(b) BS bi-static

(c) BS-to-UE bi-static

(d) UE mono -static

(e) UE bi-static

(f) UE-to-BS bi-static

EP 4 668 642 A1

## FIG. 13

SRS-p resource sets configured for each BWP of CC

list of SRS-p resource sets for BW aggregation across CCs

| CC#1 | UL BWP#a | SRS resource set#1 |
| | | SRS resource set#2 |
| | | .. |
| | | SRS resource set#i |
| | UL BWP#b | SRS resource set#1 |
| | | SRS resource set#2 |
| | ... | ... |
| CC#2 | UL BWP#c | SRS resource set#1 |
| | | SRS resource set#2 |
| | | .. |
| | | SRS resource set#j |
| | UL BWP#d | SRS resource set#1 |
| | | SRS resource set#2 |
| | ... | ... |
| CC#3 | UL BWP#e | SRS resource set#1 |
| | | SRS resource set#2 |
| | | .. |
| | | SRS resource set#k |
| | UL BWP#f | SRS resource set#1 |
| | | SRS resource set#2 |
| | ... | ... |

EP 4 668 642 A1

# FIG. 14

```
┌──────┐                                              ┌──────────┐
│  UE  │                                              │ Network  │
└──────┘                                              └──────────┘
    │                                                      │
    │          SRS-p configuration (A05)                   │
    │◄─────────────────────────────────────────────────── │
    │                                                      │
    │      SRS-p BW aggregation configuration (A10)        │
    │◄─────────────────────────────────────────────────── │
    │                                                      │
    │  Semi-persistent SRS-p Activation Command (A15)      │
    │◄─────────────────────────────────────────────────── │
    │                                                      │
    │    BW aggregated Semi-persistent SRS-p (A20)         │
    │ ────────────────────────────────────────────────────►│
    │                                                      │
    │    BW aggregated Semi-persistent SRS-p (A21)         │
    │ ────────────────────────────────────────────────────►│
    │                        ⋮                             │
    │    BW aggregated Semi-persistent SRS-p (A22)         │
    │ ────────────────────────────────────────────────────►│
    │                                                      │
    │  Semi-persistent SRS-p Deactivation Command (A25)    │
    │◄─────────────────────────────────────────────────── │
    │                                                      │
```

# FIG. 15

# FIG. 16

Receive configuration information for SRS bandwidth aggregation — C05

Receive DCI — C10

Transmit aperiodic SRS — C15

# FIG. 17

Transmit configuration information for SRS bandwidth aggregation — D05

Transmit DCI — D10

Receive aperiodic SRS — D15

# FIG. 18

<u>1</u>

# FIG. 19

# FIG. 20

Device(100, 200)

| | |
|---|---|
| **Communication unit (110)**<br>(e.g., 5G communication unit)<br><br>Communication circuit (112)<br>(e.g., processor(s), memory(s))<br><br>Transceiver(s) (114)<br>(e.g., RF unit(s), antenna(s)) | **Control unit (120)**<br>(e.g., processor(s))<br><br>Memory unit (130)<br>(e.g., RAM, storage)<br><br>Additional components (140)<br>(e.g., power unit/battery, I/O unit,<br>driving unit, computing unit) |

# FIG. 21

Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)

108    208

Device (100, 200)
Communication unit (210)
Control unit (220)
Memory unit (230)
Driving unit (140a)
Power supply unit (140b)
Sensor unit (140c)
Autonomous driving unit (140d)

## INTERNATIONAL SEARCH REPORT

| International application No. |
| --- |
| **PCT/KR2024/001994** |

| A. | CLASSIFICATION OF SUBJECT MATTER |
| --- | --- |

**H04L 5/00**(2006.01)i; **H04W 72/232**(2023.01)i; **H04W 64/00**(2009.01)i

According to International Patent Classification (IPC) or to both national classification and IPC

| B. | FIELDS SEARCHED |
| --- | --- |

Minimum documentation searched (classification system followed by classification symbols)

H04L 5/00(2006.01); H04W 72/04(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS, 대역폭 집성(bandwidth aggregation), CC, 자원 세트(resource set), 비주기적 (aperiodic)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2012-044846 A1 (QUALCOMM INCORPORATED) 05 April 2012.<br>See paragraphs [0085]-[0086]; claims 1-2; and figures 7A-7B. | 1-15 |
| A | CN 114258132 A (HUAWEI TECHNOLOGY CO., LTD.) 29 March 2022 (2022-03-29)<br>See claims 1-8. | 1-15 |
| A | KR 10-2019-0113813 A (QUALCOMM INCORPORATED) 08 October 2019 (2019-10-08)<br>See paragraphs [0152]-[0169]; and figure 16. | 1-15 |
| A | KR 10-2100632 B1 (QUALCOMM INCORPORATED) 14 April 2020 (2020-04-14)<br>See paragraphs [0059]-[0064]; and figure 5. | 1-15 |
| A | KR 10-2023-0008018 A (ZTE CORPORATION) 13 January 2023 (2023-01-13)<br>See paragraphs [0083]-[0093]; and figure 9. | 1-15 |

☐ Further documents are listed in the continuation of Box C.          ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **30 May 2024** | **31 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/001994**

| Patent document cited in search report | | | Publication date (day/month/year) | Patent family member(s) | | | Publication date (day/month/year) |
|---|---|---|---|---|---|---|---|
| WO | 2012-044846 | A1 | 05 April 2012 | CN | 103229448 | A | 31 July 2013 |
| | | | | CN | 103229448 | B | 06 April 2016 |
| | | | | CN | 202555321 | U | 28 November 2012 |
| | | | | EP | 2622778 | A1 | 07 August 2013 |
| | | | | EP | 2622778 | B1 | 13 September 2017 |
| | | | | JP | 2013-544042 | A | 09 December 2013 |
| | | | | JP | 5784737 | B2 | 24 September 2015 |
| | | | | KR | 10-2013-0096748 | A | 30 August 2013 |
| | | | | US | 2012-0257582 | A1 | 11 October 2012 |
| | | | | US | 9350506 | B2 | 24 May 2016 |
| CN | 114258132 | A | 29 March 2022 | WO | 2022-062838 | A1 | 31 March 2022 |
| KR | 10-2019-0113813 | A | 08 October 2019 | BR | 112019016632 | A2 | 14 April 2020 |
| | | | | CA | 3049123 | A1 | 16 August 2018 |
| | | | | CN | 110268776 | A | 20 September 2019 |
| | | | | CN | 110268776 | B | 25 July 2023 |
| | | | | CN | 116647921 | A | 25 August 2023 |
| | | | | EP | 3580975 | A1 | 18 December 2019 |
| | | | | JP | 2020-507989 | A | 12 March 2020 |
| | | | | JP | 2022-136195 | A | 15 September 2022 |
| | | | | JP | 7114609 | B2 | 08 August 2022 |
| | | | | JP | 7422820 | B2 | 26 January 2024 |
| | | | | KR | 10-2023-0175349 | A | 29 December 2023 |
| | | | | TW | 201832577 | A | 01 September 2018 |
| | | | | TW | I742231 | B | 11 October 2021 |
| | | | | US | 10477552 | B2 | 12 November 2019 |
| | | | | US | 10791557 | B2 | 29 September 2020 |
| | | | | US | 2018-0235025 | A1 | 16 August 2018 |
| | | | | US | 2020-0029332 | A1 | 23 January 2020 |
| | | | | WO | 2018-148021 | A1 | 16 August 2018 |
| KR | 10-2100632 | B1 | 14 April 2020 | AU | 2016-301619 | A1 | 18 January 2018 |
| | | | | AU | 2016-301619 | B2 | 23 July 2020 |
| | | | | BR | 112018002253 | A2 | 18 September 2018 |
| | | | | CN | 107852723 | A | 27 March 2018 |
| | | | | CN | 107852723 | B | 30 October 2020 |
| | | | | EP | 3332591 | A1 | 13 June 2018 |
| | | | | EP | 3332591 | B1 | 18 August 2021 |
| | | | | ES | 2886606 | T3 | 20 December 2021 |
| | | | | JP | 2018-529257 | A | 04 October 2018 |
| | | | | JP | 6640327 | B2 | 05 February 2020 |
| | | | | US | 10285171 | B2 | 07 May 2019 |
| | | | | US | 2018-0192400 | A1 | 05 July 2018 |
| | | | | WO | 2017-020289 | A1 | 09 February 2017 |
| | | | | WO | 2017-020673 | A1 | 09 February 2017 |
| KR | 10-2023-0008018 | A | 13 January 2023 | CN | 115699654 | A | 03 February 2023 |
| | | | | EP | 4066563 | A1 | 05 October 2022 |
| | | | | EP | 4066563 | A4 | 02 August 2023 |
| | | | | MX | 2022008151 | A | 18 October 2022 |
| | | | | US | 2023-0067551 | A1 | 02 March 2023 |
| | | | | WO | 2022-006729 | A1 | 13 January 2022 |

Form PCT/ISA/210 (patent family annex) (July 2022)